# EUROPÄISCHE PATENTANMELDUNG

(11) **EP 2 269 783 A1**
(43) Veröffentlichungstag der Anmeldung: **05.01.2011**
(21) Anmeldenummer: 09164232.2
(22) Anmeldetag: 30.06.2009
(51) Int. Cl.: B25J 9/16

(54) **Kalibrierungsverfahren für ein Messsystem**

(71) Anmelder: Leica Geosystems AG, 9435 Heerbrugg (CH)
(72) Erfinder: Metzler, Bernhard, 6850 Dornbirn (AT); Walser, Bernd, 9435 Heerbrugg (CH); Aebischer, Beat, 9435 Heerbrugg (CH)
(74) Vertreter: Kaminski Harmann

(57) **Zusammenfassung**

Die Erfindung betrifft ein Kalibrierungsverfahren (KV) für ein Messsystem (M), wobei das Messsystem (M) zur Bestimmung einer Positionierung eines im Rahmen eines Industrieprozesses (IP) definiert zu positionierenden Objekts (12, 22,32) ausgebildet ist. Das Messsystem (M) weist dafür mindestens eine erste Aufnahmeeinrichtung (1,1a) mit einer ersten Kamera (2,2a) zur Erfassung eines ersten Bilds innerhalb eines ersten Sichtbereichs (8,8a) und eine ersten Winkelmesseinheit (4,4a) zur hochpräzisen Bestimmung einer ersten Winkelausrichtung der ersten Kamera (2,2a) auf.

Im Rahmen des Industrieprozesses (IP), in dem das Messsystem (M) eingesetzt wird, wird dabei in einem bekannten Takt (Ta) wiederholt - während Positionierungsphasen (Ph) - das Objekt (12,22,32) definiert positioniert und durch das Messsystem (M) Messungen bezüglich der Positionierung des Objekts (12,22,32) durchgeführt sowie - während Positionierungspausen (Pa) - sonstige Prozessschritte durchgeführt, insbesondere Bearbeitungs-, Verarbeitungs-, Kontroll- und/oder Transportierschritte. Der Takt (Ta) steuert dabei einen Fortschritt des Industrieprozesses (IP) .

Im Rahmen des Kalibrierungsverfahrens (KV) erfolgen die Schritte:
- Durchführen von Kalibrierungsmessungen (KM) eines Kalibrierungsmesszyklus (MZ) mit einem Erfassen von Kalibrierungsmessdaten (KD), wobei der Kalibrierungsmesszyklus (MZ) zumindest eine derartige Anzahl und Varietät von Kalibrierungsmessungen (KM) aufweist, dass sich anhand der erfassten Kalibrierungsmessdaten (KD) Kalibrierungsparameter (KP) bestimmen lassen, die sich zumindest auf Position (P) und Orientierung der ersten Aufnahmeeinrichtung (1,1a) in einem definierten Koordinatensystem beziehen, sowie
- Ermitteln der Kalibrierungsparameter (KP) anhand der Kalibrierungsmessdaten (KD).

Erfindungsgemäss ist dabei der Kalibrierungsmesszyklus (MZ) in mehrere, insbesondere eine Vielzahl von Teil-Zyklen (TZ1,TZ2,TZ3,TZ4,TZ5,TZ6,TZi) aufgeteilt, denen jeweils eine oder mehrere der Kalibrierungsmessungen (KM) zugeordnet sind. Unter Einhaltung des Takts (Ta) erfolgen nun die Teil-Zyklen (TZ1,TZ2,TZ3,TZ4,TZ5,TZ6,TZi) jeweils in einer der Positionierungspausen (Pa), sodass der Kalibrierungsmesszyklus (MZ) über mehrere, insbesondere eine Vielzahl von Positionierungspausen (Pa) verteilt und in den Ablauf des Industrieprozesses (IP) - ohne Beeinflussung desselben - integriert wird.

## Beschreibung

Die Erfindung betrifft ein Kalibrierungsverfahren für ein Messsystem nach dem Oberbegriff des Anspruchs 1, ein Computerprogrammprodukt zur Durchführung der Kalibrierung nach Anspruch 13 und ein Messsystem zur Bestimmung einer Positionierung eines im Rahmen eines Industrieprozesses definiert zu positionierenden Objekts nach Anspruch 14.

Verfahren und Systeme zum hochpräzisen Positionieren mindestens eines Objekts in eine definierte Endlage im Raum mittels eines Industrieroboters und eines Messsystems finden insbesondere Anwendung bei Montage- und Fertigungsvorgängen in automatisierten Fertigungsstrassen, beispielsweise in der Automobilindustrie. Dabei soll ein Objekt, beispielsweise ein Blech- oder sonstiges Karosserieteil, mittels eines Industrieroboters hochpräzise in eine bestimmte Position und Ausrichtung im Raum zur Durchführung eines Arbeitsschritts gebracht werden.

Aus dem Stand der Technik sind Handhabungssysteme zum definierten Positionieren eines mittels einer Greifvorrichtung gegriffenen Objekts in eine vorgegebene Position und Ausrichtung im Raum bekannt, insbesondere Industrieroboter, z.B. Gelenkarmroboter. Dabei können die Industrieroboter interne Messsysteme aufweisen, welche die Stellung der Glieder des Handhabungssystems erfassen können und somit Aufschluss über die Position und Ausrichtung der Greifvorrichtung im Raum geben.

Somit ist es möglich, die Greifvorrichtung einschliesslich des gegriffenen Objekts in eine bestimmte vorgegebene Stellung durch entsprechende Eingabe an die Robotersteuerung zu verstellen. Das gegriffene Objekt wird also durch Vorgabe einer Stellung der Greifvorrichtung im Raum positioniert. Hierbei ergeben sich jedoch insbesondere die folgenden beiden Probleme.

Zum einen ist das interne Messsystem herkömmlicher Industrieroboter, die zum Halten schwerer Objekte ausgelegt sind, nicht derart präzise, dass die Greifvorrichtung eine derart genaue Lage, wie sie bei manchen Fertigungsverfahren gefordert ist, im Raum einnehmen kann. Zwar sind die Antriebe von Industrierobotern hinreichend präzise, jedoch nicht dessen Messsysteme. Durch die kinematische Kette multiplizieren sich die Messfehler der einzelnen Messglieder. Dies ergibt sich sowohl aus der Messungenauigkeit der einzelnen Messglieder, insbesondere der Winkelmesser eines Gelenkarmroboters, als auch aus der unvermeidbaren Elastizität der Roboterglieder.

Zum anderen ergibt sich aus der Stellung der Greifvorrichtung und somit deren Lage im Raum noch nicht zwangsläufig die Lage des Objekts im Raum, da das Objekt meist nur innerhalb einer Greiftoleranz gegriffen werden kann. Diese Greiftoleranz liegt oft weit über der geforderten Positionierungsgenauigkeit. Somit muss der Greiffehler, also die relative Lage des Objekts zur Greifvorrichtung, ebenfalls berücksichtigt werden. Hierzu kommen gesonderte, nicht mehr zum Roboter gehörende Messsysteme, insbesondere berührungslose optische Messsysteme zum Einsatz. Erst diese ermöglichen es, das Objekt im Raum mit der geforderten Genauigkeit in einer bestimmten Lage zu positionieren.

Derartige berührungslose Messsysteme, mithilfe welcher ein Objekt im Rahmen eines Industrieprozesses definiert hochpräzise in eine Endlage im Raum positioniert werden kann, sind z.B. in den beiden Europäischen Patentanmeldungen Nr. 07124101.2 und Nr. 09161295.2 - wie folgt - beschrieben.

Das in der Europäischen Patentanmeldungen Nr. 07124101.2 beschriebene Verfahren wird dabei mittels eines Industrieroboters, einer ersten optischen Aufnahmeeinrichtung und mindestens einer zweiten optischen Aufnahmeeinrichtung durchgeführt. Der erste Industrieroboter ist in vorgebbare Stellungen verstellbar. Er ist innenkalibriert sowie in dem dreidimensionalen Raum-Koordinatensystem kalibriert und zu diesem in Bezug gebracht. Die erste optische Aufnahmeeinrichtung, die in einem dreidimensionalen Raum-Koordinatensystem kalibriert und in einer bekannten ersten Position mit einer bekannten Ausrichtung positioniert ist, umfasst eine optisch kalibrierte erste Kamera zur Bildaufnahme innerhalb eines bestimmten ersten Sichtfelds, eine erste Antriebseinheit zum - ein Verstellen des ersten Sichtfelds bewirkenden - Ausrichten der ersten Kamera und eine im Raum-Koordinatensystem kalibrierte erste Winkelmesseinheit zum hochpräzisen Erfassen der Winkelausrichtung der ersten Kamera, so dass das erste Sichtfeld im Raum-Koordinatensystem bestimmbar ist. Die mindestens eine zweite optische Aufnahmeeinrichtung, die in dem dreidimensionalen Raum-Koordinatensystem kalibriert und in einer bekannten zweiten Position mit einer bekannten Ausrichtung positioniert ist, umfasst eine optisch kalibrierte zweite Kamera zur Bildaufnahme innerhalb eines bestimmten zweiten Sichtfelds, eine zweite Antriebseinheit zum - ein Verstellen des zweiten Sichtfelds bewirkenden - Ausrichten der zweiten Kamera und eine im Raum-Koordinatensystem kalibrierte zweite Winkelmesseinheit zum hochpräzisen Erfassen der Winkelausrichtung der zweiten Kamera, so dass das zweite Sichtfeld im Raum-Koordinatensystem bestimmbar ist. Die mindestens zwei Positionen, also die der ersten und der zweiten Aufnahmeeinrichtung, sind derart beabstandet, dass eine dreidimensionale Bildaufnahme des mindestens einen Objekts mittels der mindestens zwei Aufnahmeeinrichtungen durch zumindest teilweise überscheidende Sichtfelder ermöglicht ist.

Das Verfahren umfasst folgende Schritte:
Ein erstes Objekt, das bekannte optisch erfassbare erste Merkmale aufweist, wird von dem ersten Industrieroboter innerhalb einer Greiftoleranz gegriffen und gehalten.

Eine derartige, die Greiftoleranz korrigierende erste Abgleichgrösse wird für den ersten Industrieroboter bestimmt, so dass das erste Objekt im Raum-Koordinatensystem durch Vorgabe einer Stellung des ersten Industrieroboters abgeglichen verstellbar ist. Dieses Bestimmen der ersten Abgleichgrösse erfolgt durch folgende Schritte: Ausrichten der mindestens zwei Kameras jeweils mittels der Antriebseinheit mit sich zumindest teilweise überschneidenden Sichtfeldern der Kameras auf zumindest einen Teil der ersten Merkmale des ersten Objekts, das in einer ersten Abgleichstellung des ersten Industrieroboters gehaltenen wird. Aufnehmen erster Bildaufnahmen mittels der beiden Kameras. Bestimmen der Lage des ersten Objekts im Raum-Koordinatensystem in der ersten Abgleichstellung des ersten Industrieroboters aus den Positionen der Aufnahmeeinrichtungen, den durch die Winkelmesseinheiten erfassten Winkelausrichtungen der Kameras, den ersten Bildaufnahmen und der Kenntnis der ersten Merkmale auf dem ersten Objekt. Bestimmen der ersten Abgleichgrösse durch Heranziehen der ersten Abgleichstellung des ersten Industrieroboters und zumindest der bestimmten Lage des ersten Objekts in der ersten Abgleichstellung des ersten Industrieroboters.

Das erste Objekt wird hochpräzise in eine erste Endlage verstellt durch die folgenden, sich wiederholenden Schritte, bis die erste Endlage in einer vorgegebenen Toleranz erreicht ist:
Aufnehmen weiterer erster Bildaufnahmen mit den Kameras. Bestimmen der aktuellen Lage des ersten Objekts im Raum-Koordinatensystem aus den Positionen der Aufnahmeeinrichtungen, den durch die Winkelmesseinheiten erfassten Winkelausrichtungen der Kameras, den weiteren ersten Bildaufnahmen und der Kenntnis der ersten Merkmale auf dem ersten Objekt. Berechnen der Lagedifferenz zwischen der aktuellen Lage des ersten Objekts und der ersten Endlage. Berechnen einer neuen Sollstellung des ersten Industrieroboters unter Berücksichtigung der ersten Abgleichgrösse aus der aktuellen Stellung des ersten Industrieroboters und einer mit der Lagedifferenz verknüpften Grösse, und Verstellen des ersten Industrieroboters in die neue Sollstellung.

Des Weiteren ist in der Europäischen Patentanmeldung Nr. 07124101.2 ein ebensolches System zum hochpräzisen Positionieren mindestens eines Objekts in eine Endlage im Raum aus einem Industrieroboter, einer ersten optischen Aufnahmeeinrichtung, einer zweiten optischen Aufnahmeeinrichtung und einer Steuereinheit beschrieben. Anhand der Steuereinheit werden dabei die Aufnahmeeinrichtungen und der Industrieroboter derart gesteuert, dass durch diese das oben beschriebene Verfahren entsprechend durchgeführt wird.

Dieses beschriebene Verfahren und entsprechende System zeichnen sich insbesondere durch Flexibilität, Präzision und hohe Prozessgeschwindigkeit aus.

In der Europäischen Patentanmeldung Nr. 09161295.2 wird - parallel zu dem Verfahren und System aus der Europäischen Patentanmeldung Nr. 07124101.2 - auch ein solches Verfahren und System zum hochpräzisen Positionieren mindestens eines Objekts in eine Endlage im Raum beschrieben, wobei jedoch 3D-Bildaufnahmeeinrichtungen als Aufnahmeeinrichtungen eingesetzt werden.

Aus dem Stand der Technik sind dabei unterschiedliche 3D-Bildaufnahmeeinrichtungen bekannt. Beispielsweise existieren 3D-Bildaufnahmeeinrichtungen, die sich im Wesentlichen aus zwei oder drei Kameras zusammensetzen, wobei die Kameras zueinander beabstandet - also eine Stereobasis aufweisend - in einem gemeinsamen Gehäuse fest miteinander gekoppelt zum Aufnehmen einer Szene aus jeweils unterschiedlichen, jedoch fixen relativen Perspektive untergebracht sind. Da der aufgenommene Flächenabschnitt nicht zwangsläufig charakteristische Bildmerkmale aufweist, die ein elektronisches Verarbeiten der Bilder ermöglichen, können Markierungen auf dem Flächenabschnitt aufgebracht werden. Diese Markierungen können mittels eines von der 3D-Bildaufnahmeeinheit auf den Flächenabschnitt projizierten strukturierten Lichtstrahls, insbesondere Laserstrahls, der beispielsweise ein optisches Raster oder ein optisches Markierungskreuz projiziert, erzeugt werden. Üblicherweise beinhalten derartige 3D-Bildaufnahmeeinheiten auch eine Bildverarbeitungseinrichtung, die aus den mehreren im Wesentlichen gleichzeitig aufgenommenen Bildern unterschiedlicher Perspektiven ein dreidimensionales Bild ableitet.

Derartige 3D-Bildaufnahmeeinheiten sind beispielsweise die unter dem Markennamen "Optigo" und "OptiCell" bekannten Bildaufnahmesysteme der Firma "CogniTens", die drei in einem gleichschenkligen Dreieck angeordnete Kameras enthalten, sowie das System "Advent" der Firma "ActiCM" mit zwei nebeneinander angeordneten hochauflösenden CCD-Kameras sowie einem Projektor zur Projektion von strukturiertem Licht auf den aufzunehmenden Abschnitt.

Die Bestimmung der Koordinaten von zu vermessenden, aufgenommenen Bildelementen erfolgt in der Regel mittels referenzierter Markierungen innerhalb des Bildes, von welchen Markierungen aus die eigentliche 3D-Koordinatenmessung stattfindet. Hierbei wird das Bildkoordinatensystem, welches sich auf das aufgenommene dreidimensionale Bild bezieht und somit auf die 3D-Bildaufnahmeeinheit bezogen ist, in das Objektkoordinatensystem, innerhalb welchem das Objekt zu vermessen ist und welchem beispielsweise das CAD-Modell des Objekts zugrunde liegt, transformiert. Die Transformation findet auf Basis von aufgenommenen Referenz-Markierungen statt, deren Positionen im Objektkoordinatensystem bekannt sind. Mit den aus dem Stand der Technik bekannten 3D-Bildaufnahmeeinheiten werden hierbei Genauigkeiten von unter 0,5 Millimeter erreicht.

Weiters sind 3D-Scansysteme insbesondere in Form von 3D-Scannern mit elektrooptischer Distanzmessung bekannt, welche innerhalb eines Flächenbereichs eine Tiefenabtastung durchführen und eine Punktwolke erzeugen. Hierbei ist zwischen seriellen Systemen, bei welchen ein punktartiger Messstrahl eine Fläche punktweise abtastet, parallelen Systemen, bei welchen ein linienartiger Messstrahl eine Fläche linienweise abtastet, und vollparallelen Systemen, die eine Vielzahl an Punkten innerhalb eines Flächenbereichs zeitgleich abtasten und somit eine Tiefenaufnahme des Flächenbereichs durchführen, zu unterscheiden. Allen diesen Systemen ist in der Regel gemein, dass die Tiefenabtastung mittels mindestens eines auf die Fläche gerichteten und/oder über die Fläche bewegten Distanzmessstrahls erfolgt.

Ausserdem existieren RIM-Kameras, auch RIMs oder Range Imaging Systeme genannt, mittels welcher eine Bildaufnahme eines Objekts bei gleichzeitigem Erfassen einer Tiefeninformation für jeden Bildpunkt oder für eine Gruppe von Bildpunkten möglich ist. Somit ist es möglich, mittels einer einzigen Vorrichtung ein dreidimensionales Bild, bei welchem jedem Bildpunkt oder einer Vielzahl an Bildpunktgruppen eine Tiefeninformation, also eine Abstandsinformation zur Kamera, zugeordnet ist, aufzunehmen.

Aus der WO 2007/004983 A1 (Pettersson) ist ein Verfahren zum fügenden Schweissen von Werkstücken, insbesondere gepressten Blechteilen oder Verbundblechen, bekannt. Die zusammenzufügenden Werkstücke werden von Industrierobotern gehalten und von diesen relativ zueinander zur gegenseitigen Schweissverbindung positioniert. Während des Herstellens der Schweissverbindung werden die Werkstücke von den Industrierobotern in den jeweiligen Lagen gehalten, so dass die relative Lage der Teile zueinender erhalten bleibt. Das Schweissen erfolgt beispielsweise mittels eines Schweissroboters. Ein Messsystem misst die Positionen der Werkstücke, um ein Positionieren der Werkstücke vor dem Schweissvorgang zu ermöglichen. Die Messung erfolgt insbesondere kontinuierlich während des Schweissvorgangs. Das beschriebene Verfahren ermöglicht es, auf die ansonsten üblichen werkstückspezifischen und aufwendig herzustellenden Formen und Werkstückaufnahmen, in welche die Werkstücke vor dem Schweissen fixiert werden müssen, zu verzichten. Die Industrieroboter können für unterschiedlich geformte und ausgestaltete Werkstücke universell eingesetzt werden, da durch das Erfassen der Position der Werkstücke mittels des Messsystems ein Identifizieren und Kontrollieren der Werkstücke sowie ein genaues relatives Positionieren der Teile zueinander möglich ist. Somit kann ein einziges System für unterschiedliche Werkstücke verwendet werden. Der Wechsel von Werkstückaufnahmen erübrigt sich somit. Das beschriebene Verfahren eignet sich gemäss der Offenbarung insbesondere zum Schweissen von Blechteilen, vor allem in der Automobilindustrie. Als mögliches Messsystem wird allgemein ein Lasertriangulationsverfahren, in welchem zuvor definierte Punkte auf dem Werkstück vermessen werden, genannt. Hierzu sind beispielsweise Reflektoren auf dem Werkstück angebracht. Die Position jedes Reflektors kann gemäss der Beschreibung mittels einer Lichtquelle und einem zweidimensionalen Detektor ermittelt werden, so dass die Position und Ausrichtung des Werkstücks mittels dreier solcher Punkte erfasst werden kann.

Gemein ist diesen Systemen und Verfahren, dass die Positionen mehrerer ausgezeichneter Punkte auf dem Objekt mittels berührungsloser photogrammetrischer Koordinatenmessungen unter Zuhilfenahme bildverarbeitender Systeme ermittelt werden.

Zur Kalibrierung eines solchen Messsystems, mithilfe dessen ein Objekt im Rahmen eines Industrieprozesses hochpräzise in eine Sollstellung positionierbar ist, ist es bekannt, vorab eine Vielzahl an Kalibrierungsmessungen eines vorgegebenen und standardmässig ablaufenden Kalibrierungsmesszyklus durchzuführen. Der Kalibrierungsmesszyklus ist dabei so ausgelegt, dass dieser zumindest eine gewisse Anzahl und Varietät von Kalibrierungsmessungen aufweist. Anhand der - bei Durchführung der Kalibrierungsmessungen erfassten - Kalibrierungsmessdaten lassen sich nun Kalibrierungsparameter bestimmen, die sich zumindest auf Position und Orientierung der Aufnahmeeinrichtung des Messsystems in einem definierten Koordinatensystem, sowie insbesondere auch auf innere Kalibrierungsparameter einzelner Komponenten des Messsystems wie Kamerakonstante, Hauptpunkt, Kameraverzeichnung, Kalibrierungsparameter der Winkelmesseinheit, etc., beziehen.

Insbesondere kann der Kalibrierungsmesszyklus eine derartige Anzahl und Varietät von Kalibrierungsmessungen aufweisen, dass die Kalibrierungsparameter durch die dabei erfassten Kalibrierungsmessdaten überbestimmt sind. Das Ermitteln der Kalibrierungsparameter kann dann z.B. durch eine Ausgleichsrechnung, insbesondere nach der Methode der kleinsten Quadrate, erfolgen.

Als die Kalibrierungsmessungen können dabei z.B. jeweils - in unterschiedlichen Ausrichtungen - Bilder anhand der ersten Kamera und die jeweilige Winkelausrichtung anhand der Winkelmesseinheit erfasst werden. Zudem können Bildkoordinaten von einem oder mehreren definierten Ziel-Marken in den erfassten Bildern anhand elektronischer Bildverarbeitung bestimmt werden, insbesondere wobei die Positionen der im Raum definiert angeordneten Ziel-Marken und/oder Distanzen zwischen den Ziel-Marken im Raum-Koordinatensystem hochgenau bekannt sind.

D.h., die Kalibrierungsmessungen eines Kalibrierungsmesszyklus werden beispielsweise jeweils unter, insbesondere vordefinierter, Variation der Winkelausrichtung der Kamera bzw. Kameras und/oder unter Variation der Positionen der Ziel-Marken im Raum-Koordinatensystem durchgeführt, wobei die Positionen der Ziel-Marken und/oder eine Verrückung der Ziel-Marken zwischen den Kalibrierungsmessungen im Raum-Koordinatensystem jeweils bekannt sind oder mitbestimmt werden. Aus der Zusammenschau der bei Durchführung eines derartigen, vorprogrammierten Ablaufs eines Kalibrierungsmesszyklus mit einer Vielzahl an unterschiedlichen Kalibrierungsmessungen erfassten Kalibrierungsmessdaten können anschliessend die aktuellen äusseren und inneren Kalibrierungsparameter des Messsystems ermittelt werden.

Eine instabile Umgebung resultiert in zeitabhängigen äusseren Einflüssen auf das Messsystem (wie Driften aus Temperaturänderungen, Vibrationen und/oder Deformationen). Dies kann eine wiederholte Kalibrierung - insbesondere der äusseren Orientierungsparameter aller Aufnahmeeinrichtungen des Messsystems - erfordern.

Um bezüglich der aktuellen Umgebung und äusseren Einflüsse jeweils hinreichend angepasste Kalibrierungsparameter zu erhalten, sollte eine vollständige Re-Kalibrierung des Messsystems unter den üblichen Bedingungen z.B. etwa zweimal pro Tag erfolgen. Da - bei nach dem Stand der Technik bekannter Durchführung eines Kalibrierungsmesszyklus - jede dieser Re-Kalibrierungen z.B. ungefähr 30 Minuten oder länger benötigen, könnte dies zu Produktionsunterbrechungen von einem Vielfachen der Produktionstaktzeiten führen. In üblichen Industrie-/Produktionsprozessen (z.B. in der Automobilindustrie) gewöhnliche Produktionstaktzeiten betragen etwa zwischen 30 und 120 Sekunden - je nach Komplexität des Produktionsschritts/Verarbeitungsprozesses (Schweissen, Kleben, Falzen, Transportieren, Überprüfen, etc.) bzw. der zu verarbeitenden Teile (Türen, Body, Dach, Motorhaube, etc.).

Daraus ergibt sich der Zielkonflikt, einerseits ein möglichst jeweils aktuell kalibriertes und somit eine hohe Präzision erlaubendes Messsystem bereitzustellen, und andererseits den Produktionsfortschritt des Industrie-/Produktionsprozesses, für den das Messsystem eingesetzt wird, möglichst wenig oder bestenfalls gar nicht durch Kalibrierungsvorgänge zu stören/zu verzögern. Dieser Zielkonflikt ist im Stand der Technik bisher ungenügend gelöst.

Zudem würden selbst solche "zeitlichen Stichproben" einer Re-Kalibrierung etwa zweimal am Tag keinen sofortigen Eingriff (Korrekturen) direkt in Positionierungs-Messungen, welche zur hochpräzisen Positionierung des Objekts im Rahmen des Industrieprozesses erfolgen, zulassen.

Eine Aufgabe der Erfindung ist daher, ein verbessertes Kalibrierungsverfahren für ein Messsystem, das zur Bestimmung einer Positionierung eines im Rahmen eines Industrieprozesses definiert zu positionierenden Objekts ausgebildet ist, bereitzustellen. Insbesondere soll dabei der oben genannte Zielkonflikt verbessert gelöst werden können, sodass sowohl die Kalibrierungsparameter des Messsystems jeweils hinreichend aktuell auf die äusseren Bedingungen angepasst sind und dennoch der Industrie-/Produktionsprozess durch dafür erforderliche Kalibrierungsmessungen weniger (insbesondere gar nicht) gestört und/oder verzögert wird.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung bezieht sich auf ein Kalibrierungsverfahren für ein Messsystem, das zur Bestimmung einer Positionierung eines im Rahmen eines Industrieprozesses definiert in eine vorgegebene Endlage im Raum zu positionierenden Objekts (z.B. ein oder mehrere im Rahmen des Prozesses zu verarbeitende Teile oder ein im Rahmen des Prozesses verwendetes Werkzeug) ausgebildet ist. Das Messsystem ist dabei insbesondere zur Ermittlung der Positionen mehrerer ausgezeichneter/markierter Punkte auf dem Objekt mittels berührungsloser photogrammetrischer Koordinatenmessungen unter Zuhilfenahme bildverarbeitender Systeme ausgelegt. Wie dem Fachmann bereits bekannt, kann das Messsystem dafür mindestens eine erste Aufnahmeeinrichtung mit einer ersten Kamera zur Erfassung eines ersten Bilds innerhalb eines ersten Sichtbereichs und mit einer ersten Winkelmesseinheit zur hochpräzisen Bestimmung einer ersten Winkelausrichtung der ersten Kamera aufweisen. Insbesondere können auch mindestens zwei solcher Aufnahmeeinrichtungen als Teil des Messsystems vorhanden sein.

Im Rahmen des Industrieprozesses (z.B. einem Produktionsprozesses von Automobilteilen), in dem das Messsystem zur Ermöglichung einer definierten hochpräzisen Positionierung des Objekts im Raum eingesetzt wird, werden dabei in einem bekannten Takt wiederholt
- während Positionierungsphasen das Objekt definiert positioniert und daher Positions-Messungen durch das Messsystem bezüglich der Positionierung des Objekts durchgeführt, und
- während Positionierungspausen sonstige Prozessschritte durchgeführt, insbesondere Bearbeitungs-, Verarbeitungs-, Kontroll- und/oder Transportierschritte (z.B. Schweissen, Kleben, Falzen, Transportieren, Überprüfen, etc.).

Der Takt definiert und steuert dabei einen Fortschritt des Industrieprozesses.

Im Rahmen des Kalibrierungsverfahrens erfolgen nun die folgenden, dem Fachmann an sich bekannten Schritte:
- Durchführen von Kalibrierungsmessungen eines Kalibrierungsmesszyklus mit einem Erfassen von Kalibrierungsmessdaten, wobei der Kalibrierungsmesszyklus zumindest eine derartige Anzahl und Varietät von Kalibrierungsmessungen aufweist, dass sich anhand der erfassten Kalibrierungsmessdaten Kalibrierungsparameter bestimmen lassen, die sich zumindest auf Position und Orientierung der ersten Aufnahmeeinrichtung in einem definierten Koordinatensystem beziehen, und
- Ermitteln der Kalibrierungsparameter anhand der Kalibrierungsmessdaten.

Erfindungsgemäss erfolgt das Durchführen von Kalibrierungsmessungen des Kalibrierungsmesszyklus jedoch nicht, wie nach dem Stand der Technik üblich, in einem zusammenhängenden Block beispielsweise vor Beginn der Messfunktion des Messsystems im Rahmen des Industrieprozesses. Hingegen wird gemäss der Erfindung - gegenteilig zur En-bloc-Durchführung aus dem Stand der Technik - der Kalibrierungsmesszyklus in mehrere, insbesondere eine Vielzahl von Teil-Zyklen aufgeteilt, denen jeweils eine oder mehrere der Kalibrierungsmessungen zugeordnet sind.

Dabei werden unter Einhaltung des Industrieprozess-Takts die Teil-Zyklen jeweils in einer der Positionierungspausen - während welchen im Rahmen des Industrieprozesses bedingt durch z.B. Bearbeitungs- oder Transportschritte (Schweissen, Löten, Weitertransport, Abkühlzeiten, etc.) keine Positionsbestimmungen der zu verarbeitenden Teile oder der Greif-/Bearbeitungswerkzeuge (z.B. Industrieroboter) erforderlich sind - durchgeführt, sodass der Kalibrierungsmesszyklus über mehrere, insbesondere eine Vielzahl von Positionierungspausen verteilt wird.

Ein Kalibrierungsmesszyklus wird erfindungsgemäss also aufgesplittet in eine Vielzahl von Teil-Zyklen, die jeweils verhältnismässig kleine Zeitfenster benötigen. Diese Teil-Zyklen werden zeitlich verteilt jeweils auf Positionierungspausen, in welchen keine Messungen bzgl. der Positionierung der Objekte durch das Messsystem vorgesehen sind. Somit werden jeweils die Positionierungspausen als Kalibrierungs-Teilphasen verwendet. Dadurch ist im Rahmen des erfindungsgemässen Verfahrens zum Kalibrieren des Messsystems weder eine kalibrierungsbedingte Unterbrechung noch eine kalibrierungsbedingte Verzögerung des speziell an den jeweiligen Industrie-/Produktionsprozess angepassten Takts erforderlich. Der zeitlich in viele kleine Teil-Zyklen aufgesplittete Kalibrierungsmesszyklus wird also - ohne sich negativ auf den Fortschritt des Industrieprozesses auswirkende Hinauszögerung des Takts - in den Industrieprozesses integriert.

Die Kalibrierung kann demnach ohne Unterbrechung/Störung der Taktzeiten durch Nutzen der Zeitfenster zwischen Positionierungsmessungen der zu verarbeitenden Teile erfolgen. Dabei werden die diversen Kalibrierungsmessungen über mehrere Zeitfenster so verteilt, dass nach einer bestimmten Zeitspanne ein vollständiger Kalibrierungszyklus erreicht ist. Danach können die Kalibrierungsmessungen insbesondere fortlaufend wiederholt werden.

Diese zeitliche Aufteilung der Kalibrierungsmessungen auf jeweils Positionierungspausen bzw. Positionierungsmess-Todzeiten erlaubt eine Kombination der einzelnen, für eine Gesamtkalibrierung erforderlichen Kalibrierungsmessungen derart, dass diese auch unter Einhaltung des Takts wiederholt bzw. quasi fortlaufend erfolgen können. Beispielsweise können somit Kalibrierungsmessdaten aus Kalibrierungsmessungen, die während eines gleitenden Zeitfenster jeweils in Positionierungspausen durchgeführt werden, zu einer fortlaufenden Schätzung der Parameter herangezogen werden. Insbesondere liegen nach jedem durchlaufenen Teil-Zyklus mit Kalibrierungsmessungen aufdatierte Messdaten für eine aktualisierte Bestimmung der Kalibrierungsparameter vor. Erfindungsgemäss kann somit eine fortlaufend sich zumindest teilweise ständig aktualisierende Kalibrierung des Messsystems erfolgen.

Zusammengefasst wird also gemäss der vorliegenden Erfindung die Kalibrierung des Messsystems in den laufenden Produktionsprozess integriert und Todzeiten des Messsystems ausgenutzt, nämlich Zeiten, in welchen bedingt durch z.B. Bearbeitungs- oder Transportschritte (Schweissen, Löten, Weitertransport, Abkühlzeiten, etc.) keine Positionsbestimmungen der zu verarbeitenden Teile oder der Greif-/Bearbeitungswerkzeuge (z.B. Industrieroboter) erforderlich sind. So kann eine Beeinträchtigung des Industrie-/Produktionsprozesses vermindert und insbesondere gar vermieden werden.

Dabei können erfindungsgemäss dennoch - insbesondere während der gesamten Betriebszeit des Industrieprozesses - verhältnismässig zeitnah und regelmässig an jeweils aktuelle Umgebungsbedingungen angepasste Kalibrierungsparameter ermittelt werden, um etwaige Veränderungen in der Mess- und somit auch Produktionsumgebung zeitnah zu detektieren bzw. das Mess- und Steuerungssystem diesen Veränderungen anzupassen.

Der Zielkonflikt, einerseits ein möglichst jeweils aktuell kalibriertes und somit eine hohe Präzision erlaubendes Messsystem bereitzustellen, und andererseits den Produktionsfortschritt des Industrie-/Produktionsprozesses, für den das Messsystem eingesetzt wird, möglichst wenig oder bestenfalls gar nicht durch Kalibrierungsvorgänge zu stören/zu verzögern, kann anhand des erfindungsgemässen Kalibrierungsverfahren somit wesentlich besser gelöst werden.

Die Erfindung bezieht sich ebenso auf ein Computerprogrammprodukt, das auf einem maschinenlesbaren Träger gespeichert ist, oder Computer-Daten-Signal, verkörpert durch eine elektromagnetische Welle, mit Programmcode zur Durchführung des oben beschriebenen Kalibrierungsverfahren, insbesondere wenn das Programm in einer elektronischen Datenverarbeitungseinheit ausgeführt wird.

Zudem bezieht sich die Erfindung auf ein solches Messsystem zur Bestimmung einer Positionierung eines im Rahmen des Industrieprozesses definiert zu positionierenden Objekts.

Das Messsystem weist dabei mindestens eine erste Aufnahmeeinrichtung - insbesondere mindestens zwei Aufnahmeeinrichtungen - mit einer Kamera zur Erfassung eines Bilds innerhalb eines Sichtbereichs und einer Winkelmesseinheit zur hochpräzisen Bestimmung einer Winkelausrichtung der Kamera auf. Zudem ist eine Einheit zur Steuerung zumindest folgender Schritte des oben beschriebenen Kalibrierungsverfahrens vorgesehen:
Durchführen von Kalibrierungsmessungen eines Kalibrierungsmesszyklus mit einem Erfassen von Kalibrierungsmessdaten, wobei der Kalibrierungsmesszyklus zumindest eine derartige Anzahl und Varietät von Kalibrierungsmessungen aufweist, dass sich anhand der erfassten Kalibrierungsmessdaten Kalibrierungsparameter bestimmen lassen, die sich zumindest auf Position und Orientierung der ersten Aufnahmeeinrichtung in einem definierten Koordinatensystem beziehen. Ermitteln der Kalibrierungsparameter anhand der Kalibrierungsmessdaten.

Erfindungsgemäss ist die Steuereinheit dabei derart ausgebildet bzw. programmiert, dass der Kalibrierungsmesszyklus in mehrere, insbesondere eine Vielzahl von Teil-Zyklen aufgeteilt ist, denen jeweils eine oder mehrere der Kalibrierungsmessungen zugeordnet sind, und unter Einhaltung des Industrieprozess-Takts die Teil-Zyklen jeweils in einer der Positionierungspausen erfolgen, sodass der Kalibrierungsmesszyklus über mehrere, insbesondere eine Vielzahl von Positionierungspausen verteilt wird und sich in den originären Ablauf des Industrieprozesses einfügt.

Das erfindungsgemässe Verfahren und das erfindungsgemässe Messsystem werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Beispielsituation aus einem Industrieprozess mit einem erfindungsgemässen Messsystem in einer ersten Ausführungsform;
- Fig.2: eine Beispielsituation aus einem Industrieprozess mit einem erfindungsgemässen Messsystem in einer zweiten Ausführungsform;
- Fig.3: ein schematisches Diagramm, das die Integration eines ersten Ausführungsbeispiels des erfindungsgemässen Kalibrierungsverfahrens in einen Industrieprozess erläutert;
- Fig.4: ein schematisches Diagramm, das die Integration eines zweiten Ausführungsbeispiels des erfindungsgemässen Kalibrierungsverfahrens in einen Industrieprozess erläutert;
- Fig.5: ein schematisches Diagramm, das die Integration eines drittes Ausführungsbeispiels des erfindungsgemässen Kalibrierungsverfahrens in einen Industrieprozess erläutert; und
- Fig.6: ein schematisches Diagramm, das die Integration eines vierten Ausführungsbeispiels des erfindungsgemässen Kalibrierungsverfahrens in einen Industrieprozess erläutert.

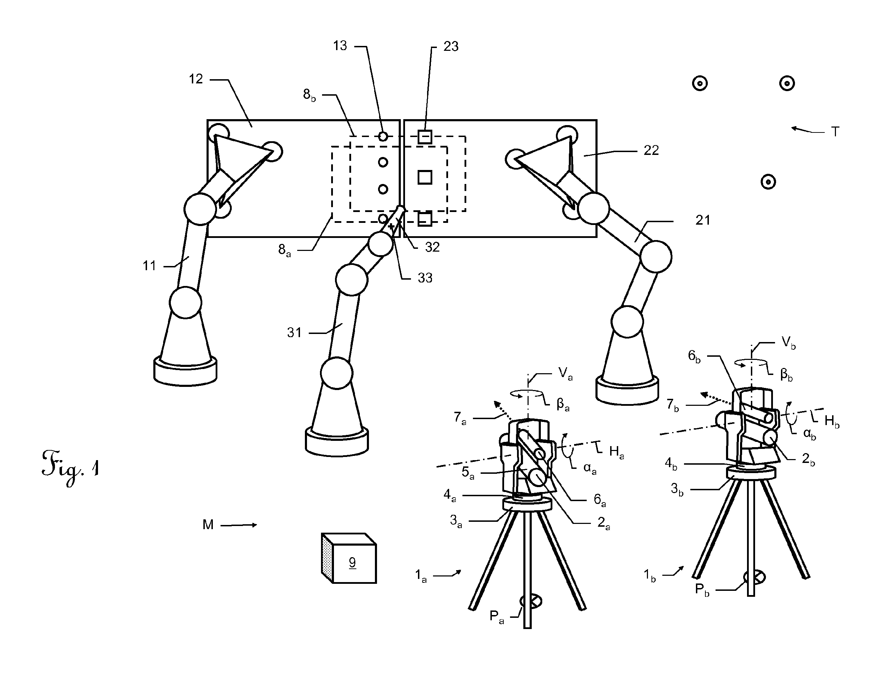

Figur 1 zeigt eine erste Ausführungsform des Messsystems M, mithilfe dessen ein im Rahmen eines Industrieprozesses zu verarbeitendes Objekt 12,22 hochpräzise in eine vorgegebene Endlage positioniert werden kann.

Das Messsystem M ist dabei derart ausgebildet, dass die Positionen mehrerer ausgezeichneter Punkte 13,14 auf dem Objekt 12,22 mittels berührungsloser Koordinatenmessungen unter Zuhilfenahme bildverarbeitender Systeme ermittelt werden. Daraus kann die Lage und Orientierung des Objekts 12,22 hochpräzise bestimmt und zur Steuerung bzw. Regelung des für den Industrieprozess erforderlichen Positioniervorgangs (z.B. zur Steuerung eines das zu positionierende Objekt greifenden Industrieroboters 11,21) verwendet werden.

Rein beispielhaft weist das Messsystem M dafür eine erste und eine zweite Aufnahmeeinrichtung 1a,1b auf. Die beiden optischen Aufnahmeeinrichtungen 1a,1b verfügen jeweils über eine Kamera 2a,2b, nämlich eine erste Kamera 2a und eine zweite Kamera 2b, zur Bildaufnahme jeweils innerhalb eines bestimmten Sichtfelds 8a,8b, so dass innerhalb des jeweiligen Sichtfelds 8a,8b Messungen und Auswertungen in der Bildaufnahme erfolgen können.

Unter einer Kamera ist allgemein eine elektronische Vorrichtung zur Aufnahme optisch erfassbarer Punkte zu verstehen, wobei die Kameras 2a und 2b jeweils über die hierzu erforderliche Ausstattung, insbesondere ein Objektiv und entsprechende Bildaufnahmeelemente, insbesondere einen CCD- oder CMOS-Bildsensor und eine entsprechende Elektronik, verfügen. Dabei kann das Objektiv - wie dem Fachmann bekannt - optional mit Zoom und/oder (Auto-)Fokussierung ausgestattet sein. Somit eignen sich die Kameras 2a,2b zur photogrammetrischen Messung. Weiters besitzen die optischen Aufnahmeeinrichtungen 1a,1b z.B. jeweils mindestens eine Antriebseinheit 3a bzw. 3b zum - ein Verstellen des jeweiligen Sichtbereichs 8a bzw. 8b der Kamera 2a und 2b bewirkenden - Ausrichten der jeweiligen Kamera 2a und 2b. Beispielsweise ist die jeweilige Antriebseinheit 3a bzw. 3b eine Schwenkeinheit zum Schwenken der Kamera 2a bzw. 2b um zwei Schwenkachsen Ha,Hb,Va,Vb.

Weiters besitzen die optischen Aufnahmeeinrichtungen 1a und 1b jeweils eine Winkelmesseinheit 4a bzw. 4b zum hochpräzisen Erfassen der Winkelausrichtung αa,αb,βa,βb der jeweiligen Kamera 2a und 2b, so dass das jeweilige Sichtfeld 8a bzw. 8b im Raum-Koordinatensystem bestimmbar ist. Aufgrund der äusseren Referenzierung der jeweiligen optischen Aufnahmeeinrichtung 1a bzw. 1b im Raum-Koordinatensystem definiert jeder Bildpunkt hochpräzise eine Gerade im Raum-Koordinatensystem, die sich erstens aus der Lage des Bildpunkts auf dem Bildsensor, also der Bildaufnahme, zweitens aus der mittels der jeweiligen Winkelmesseinheit 4a bzw. 4b erfassten Ausrichtung der jeweiligen Kamera 2a bzw. 2b und drittens aus der bekannten Position Pa,Pb der jeweiligen optischen Aufnahmeeinrichtung 1a bzw. 1b sowie viertens den jeweiligen Kalibrierungsparametern ergeben. Dabei ist unter dem Begriff Bildpunkt nicht notwendigerweise ein Pixel des Kamerasensors zu verstehen.

Zur Steuerung des Positioniervorgangs kann z.B. eine Steuereinheit 9 vorgesehen sein, die eine zur Bildverarbeitung ausgebildete Datenverarbeitungseinrichtung aufweist. Die Steuereinheit 9 steht insbesondere mit der die Positionierung durchführenden Vorrichtung (z.B. mit dem Industrieroboter 11,21 mit Greifvorrichtung) sowie mit den mindestens zwei optischen Aufnahmeeinrichtungen 1a und 1b in Datenverbindung. Der Steuereinheit 9 werden die von den Kameras 2a und 2b aufgenommenen Bildaufnahmen zur Durchführung der Bildverarbeitung und Gewinnung der Tiefeninformation zugeführt. Weiters erhält die Steuereinheit 9 die von den Winkelmesseinheiten 4a und 4b erfassten Winkelausrichtungen der Kameras 2a und 2b als Eingangssignal. Die Antriebseinheiten 3a und 3b sind mittels der Steuereinheit 9 zum Ausrichten der Kameras 2a und 2b angesteuert. Der erste Industrieroboter 11 kann in Stellungen, die durch die Steuereinheit 9 vorgegeben werden, verstellt werden. Die hierzu erforderliche Datenverbindung kann mittels Spannungssignalen, Funksignalen, optischer Signale oder sonstiger Kommunikationswege erfolgen. Die Referenz- und Kalibrierungsparameter, insbesondere die einzelnen Positionen, Ausrichtungen und Abmessungen der beteiligten Komponenten, sind - sofern zur Durchführung des Verfahrens erforderlich - in der Steuereinheit 9 gespeichert. Bei der Steuereinheit 9 kann es sich um eine Einheit, beispielsweise einen Personal Computer mit geeigneten Schnittstellen, als auch um eine Mehrzahl miteinander kommunizierender oder vernetzter, örtlich getrennter Einzelkomponenten, die beispielsweise Bestandteil einzelner Vorrichtungen sind, handeln. Insbesondere ist es möglich, dass die abstrakt zu verstehende Steuereinheit 9 Bestandteil der optischen Aufnahmeeinheiten 1a und 1b und/oder des ersten Industrieroboters 11 ist.

Das erste Objekt 12, das in die Endlage im Raum positioniert werden soll, kann beispielsweise bekannte optisch erfassbare Merkmale 13 aufweisen. Es kann sich bei diesen ersten Merkmalen 13 um beliebige Merkmale handeln, die mittels der Kameras 2a und 2b der Aufnahmeeinheiten 1a und 1b erfasst werden können. Unter dem Begriff "optisch erfassbar" ist also die Erfassbarkeit durch die Kameras 2a und 2b zu verstehen und nicht zwangsläufig die Sichtbarkeit durch das menschliche Auge. Die Merkmale 13,23 sind derart, dass deren Positionsbestimmungen die Lage, also die Position und Ausrichtung des Objekts im Raum möglichst eindeutig definieren.

Rein beispielhaft können die Aufnahmeeinrichtungen 1a,1b zusätzlich auch einen Emitter 6a,6b, der zum Emittieren eines strukturierten Lichts 7a,7b innerhalb des jeweiligen Sichtbereichs 8a,8b der Kameras ausgebildet ist. Der erste Emitter 6a ist z.B. gemeinsam mit der ersten Kamera 2a mittels der ersten Antriebseinheit 3a ausrichtbar. Zur Bestimmung der Lage des Objekts 12,22 bzw. zur hochpräzisen Positionierung desselben kann nun strukturiertes Licht 7a,7b derart auf das Objekt 12,22 projiziert werden, dass das strukturierte Licht 7a,7b im Sichtfeld der beiden Kameras 2a,2b liegt. Das Bestimmen der Lage des Objekts 12 im Raum-Koordinatensystem kann zusätzlich den das strukturierte Licht 7a,7b abbildenden Bildaufnahmen der Kameras 2a,2b mittels Triangulation erfolgen. Hierdurch lassen sich die Positionsbestimmungsgenauigkeit und die Präzision bei der Positionierung erhöhen. Weiters ist es möglich, selbst auf einem Abschnitt eines Objekts, der keine optisch erfassbaren Markierungen aufweist, Messungen durchzuführen.

Bei dem Objekt 12,22 handelt es sich um ein beliebiges, im Raum hochpräzise zu positionierendes Objekt, z.B. das von einem Industrieroboter 11,21 gegriffen und gehalten werden kann, insbesondere um ein Blechteil. Allerdings kann es sich bei dem zu positionierenden Objekt z.B. auch um ein Werkzeug 32 (rein beispielhaft ein Falzwerkzeug, Schweisswerkzeug oder eine Bohrvorrichtung) oder um einen Bearbeitungsroboter 31 (rein beispielhaft eine automatische Schweissvorrichtung) handeln, die im Rahmen des Industrieprozesses mithilfe des Messsystems M definiert hochpräzise positioniert werden sollen. Dafür kann das Werkzeug 32 wiederum ein bekanntes optisch erfassbares Merkmal 33 aufweisen.

Zur Kalibrierung eines solchen Messsystems M sowie der Komponenten des Messsystems M, mithilfe dessen ein Objekt 12,22,32 im Rahmen eines Industrieprozesses hochpräzise in eine Sollstellung positionierbar ist, wird eine Vielzahl an Kalibrierungsmessungen eines vorgegebenen und standardmässig ablaufenden Kalibrierungsmesszyklus durchgeführt. Der Kalibrierungsmesszyklus ist dabei so ausgelegt, dass dieser zumindest eine derartige Anzahl und Varietät von Kalibrierungsmessungen aufweist, dass anhand der - bei Durchführung der Kalibrierungsmessungen erfassten - Kalibrierungsmessdaten sich zumindest jene Kalibrierungsparameter bestimmen lassen, die sich auf Position und Orientierung der Aufnahmeeinrichtung des Messsystems M in einem definierten Koordinatensystem beziehen. Insbesondere ist der Kalibrierungsmesszyklus jedoch derart ausgelegt und gestaltet, dass auch weitere Kalibrierungsparameter ermittelt werden, z.B. sich auf innere Kalibrierungsparameter einzelner Komponenten des Messsystems M beziehende Kalibrierungsparameter wie Kamerakonstante, Hauptpunkt, Kameraverzeichnung, innere Kalibrierungsparameter der Winkelmesseinheit, etc.

Im Speziellen kann der Kalibrierungsmesszyklus auch eine derartige Anzahl und Varietät von Kalibrierungsmessungen aufweisen, dass die Kalibrierungsparameter durch die dabei erfassten Kalibrierungsmessdaten überbestimmt sind. Das Ermitteln der Kalibrierungsparameter kann dann z.B. durch eine Ausgleichsrechnung, insbesondere nach der Methode der kleinsten Quadrate, erfolgen.

Zur Ermittlung der Kalibrierungsparameter sind verschiedene Möglichkeiten bekannt. Beispielsweise können die Positionen Pa und Pb als Kalibrierungsparameter sowie weitere Aussenkalibrierungsparameter der Aufnahmeeinrichtungen 1a und 1b durch referenzierte externe Messsysteme, beispielsweise optische Messsysteme wie einen Lasertracker, bestimmt werden, welche die jeweilige Position der Aufnahmeeinrichtungen 1a und 1b im Raum bestimmen. Dies kann durch Zielmarken, welche auf den Aufnahmeeinrichtungen 1a und 1b angebracht sind, erfolgen. Auch die externe Kalibrierung der Ausrichtungen kann mittels externer Messsysteme erfolgen. Weiters ist es möglich, die Aufnahmeeinrichtungen 1a und 1b auf Referenzpunkten, deren Positionen hochpräzise im Raum-Koordinatensystem bekannt sind, insbesondere mittels Zwangszentrierungen zu positionieren. Alternativ besteht die Möglichkeit, dass sich die Aufnahmeeinrichtungen 1a und 1b mittels eigener Messsysteme im Raum referenzieren und kalibrieren. Hierzu können die Aufnahmeeinrichtungen 1a und 1b jeweils z.B. einen Laserdistanzmesser 5a und 5b aufweisen, der gemeinsam mit der jeweiligen Kamera 2a bzw. 2b mittels der jeweiligen Antriebseinheit 3a bzw. 3b ausrichtbar ist und dessen Winkelausrichtung mittels der jeweiligen im Raum-Koordinatensystem kalibrierten Winkelmesseinheit 4a bzw. 4b hochpräzise erfassbar ist. Selbstverständlich ist es möglich, andere geeignete Schwenk- und Messvorrichtungen zum Orientieren der Kameras und exakten Erfassen der Ausrichtungen zu verwenden.

Die Positionen Pa und Pb der jeweiligen Aufnahmeeinrichtung 1a bzw. 1b im Koordinatensystem können beispielsweise durch Zielen auf ortsfeste Zielmarken T mittels des jeweiligen Laserdistanzmessers 5a bzw. 5b bestimmt werden. Vorzugsweise kann die Selbstreferenzierung und Kalibrierung - alternativ oder zusätzlich - jedoch über Triangulation durch Bildaufnahme von ortsfesten Zielmarken T, die speziell für die Kalibrierung installiert sind, und Bildverarbeitung stattfinden.

Als die Kalibrierungsmessungen können dabei z.B. jeweils - in unterschiedlichen Ausrichtungen - Bilder anhand der Kameras und die jeweilige Winkelausrichtung anhand der Winkelmesseinheiten erfasst werden, sodass die Bildkoordinaten der definierten Ziel-Marken T in den erfassten Bildern anhand elektronischer Bildverarbeitung bestimmt werden können. Insbesondere sind dabei die Positionen der im Raum definiert angeordneten Ziel-Marken T und/oder Distanzen zwischen den Ziel-Marken T im Raum-Koordinatensystem hochgenau bekannt. Beispielsweise können die Ziel-Marken T auch entweder fest (unbeweglich) etwa in der Produktionszelle installiert oder auf beweglichen Teilen - wie z.B. einem Roboterarm - angebracht sein. Im Speziellen kann dabei auch eine so genannte Scalebar zum Einsatz kommen, welche aus zwei Ziel-Marken T und einer festen Verbindung zwischen diesen beiden besteht (z.B. zwei Kugeln als Ziel-Marken, die durch eine feste Stange verbunden sind und wobei die Distanz zwischen den beiden Kugelmittelpunkten hochgenau bestimmt ist).

Die Kalibrierungsmessungen eines Kalibrierungsmesszyklus - insbesondere eine Vielzahl von Bildaufnahmen auf jeweils einen oder mehrere der vorinstallierten Ziel-Marken T für die Kalibrierung - werden beispielsweise jeweils unter vordefinierter Variation der Winkelausrichtung der Kamera bzw. Kameras und/oder unter Variation der Positionen der Ziel-Marken im Raum-Koordinatensystem durchgeführt, wobei die Positionen der Ziel-Marken T und/oder eine Verrückung der Ziel-Marken T zwischen den Kalibrierungsmessungen im Raum-Koordinatensystem jeweils bekannt sind oder mitbestimmt werden. Weist das Messsystem M zwei Kameras auf, können sich im Rahmen einer Kalibrierungsmessung der Sichtbereich 8a der ersten Kamera 2a und der Sichtbereich 8b der zweiten Kamera 2b derart überschneiden, dass zumindest eine selbe Ziel-Marke T, insbesondere mehrere selbe Ziel-Marken T, sowohl im ersten als auch im zweiten Bild erfasst sind.

Aus der Zusammenschau der bei Durchführung eines solchen Kalibrierungsmesszyklus erfassten Kalibrierungsmessdaten können anschliessend die aktuellen äusseren und gegebenenfalls auch inneren Kalibrierungsparameter des Messsystems M ermittelt werden.

Anhand eines solchen Verfahrens können somit die optischen Aufnahmeeinrichtungen 1a, 1b in einem dreidimensionalen Raum-Koordinatensystem kalibriert werden. Dadurch sind jeweils sowohl die Position Pa,Pb wie auch die Winkelausrichtung mittelbar oder unmittelbar in demjenigen Koordinatensystem, in welchem auch das Objekt 12,22,32 zu positionieren ist, bekannt.

Insbesondere können die Kameras anhand der erfassten Kalibrierungsmessdaten zudem auch innenkalibriert werden, sodass allfällige Fehler insbesondere in der Optik, den Bildsensoren oder der Elektronik, beispielsweise Verzeichnungen etc. berücksichtigt und ausgeglichen werden können. Auch die Winkelmesseinheiten 4a bzw. 4b zum hochpräzisen Erfassen der Winkelausrichtung der jeweiligen Kamera 2a und 2b können entsprechend anhand geeigneter, erfasster Kalibrierungsmessdaten sowohl innenkalibriert als auch als äussere Kalibrierung im verwendeten Koordinatensystem referenziert werden (z.B. hinsichtlich deren Nullstellungen).

Die Kalibrierungsmessungen eines Kalibrierungsmesszyklus können dabei durch die Steuereinheit 9 als Einheit zur Steuerung des Kalibrierungsverfahrens insbesondere vorprogrammiert durchgeführt werden. Dafür kann z.B. ein Kalibrierungsprogramm auf der Steuereinheit 9 gespeichert sein, das zur Durchführung einer Kalibrierung des Messsystems ausgeführt wird. Somit können beispielsweise die oben beschriebenen Schritte des Kalibrierungsverfahrens initiiert, die jeweiligen Komponenten des Messsystems zur Durchführung der Kalibrierungsmessungen entsprechend gesteuert, sowie die Kalibrierungsparameter aus den dabei erfassten Kalibrierungsmessdaten anhand der Steuereinheit 9 ableitet und ermittelt werden.

Gemäss der Erfindung ist die Steuereinheit 9 des Messsystems M nun derart ausgebildet, dass der Kalibrierungsmesszyklus - gegenteilig zur aus dem Stand der Technik bekannten En-bloc-Kalibrierung - in mehrere, insbesondere eine Vielzahl von Teil-Zyklen aufgeteilt ist, denen jeweils eine oder mehrere der Kalibrierungsmessungen des Gesamt-Zyklus zugeordnet sind.

Zudem steuert die Steuereinheit 9 die Durchführung der Teil-Zyklen derart, dass diese unter Einhaltung eines Takts des Industrieprozesses, in dem das Messsystem eingesetzt wird, jeweils in einer Positionierungspause - während welchen im Rahmen des Industrieprozesses bedingt durch z.B. Bearbeitungs- oder Transportschritte (Schweissen, Löten, Weitertransport, Abkühlzeiten, etc.) keine Positionsbestimmungen der zu verarbeitenden Teile oder der Greif-/Bearbeitungswerkzeuge (z.B. Industrieroboter) erforderlich sind - durchgeführt werden. Der Kalibrierungsmesszyklus wird dadurch über mehrere, insbesondere eine Vielzahl von Positionierungspausen verteilt und - ohne negative Auswirkungen auf den Takt und den dadurch bestimmten Fortschritt des Industrieprozesses - in den Industrie-/Produktionsprozesses integriert.

Als Industrieprozess kommen dabei sämtliche Produktions-und Fertigungsprozesse (rein beispielhaft eine Produktionsstrasse zur Herstellung, Weiterverarbeitung, Veredelung, Wartung, etc. von Teilen) in Frage, bei welchen in einem bestimmten Prozess-Takt wiederholt und insbesondere abwechselnd jeweils - während Positionierungsphasen - mithilfe eines wie oben beschriebenen Messsystems ein Objekt hochpräzise in eine vorgegebene Lage positioniert wird und während Positionierungspausen, in welchen sonstige Prozessschritte des Industrieprozesses erfolgen (wie Bearbeitungs-, Verarbeitungs-, Kontroll-und/oder Transportierschritte), keine Messungen durch das Messsystem bezüglich eines Positioniervorgangs erfolgen.

Der Takt steuert dabei einen Fortschritt des Industrieprozesses. Typischerweise kann der Produktionstakt - z.B. zum Zusammenschweissen zweier Blechteile - zwischen 30 und 120 Sekunden liegen. Im Rahmen eines Produktionstakts kann rein beispielhaft dabei ein Greifen der Blechteile, ein hochpräzises Positionieren der Blechteile in eine vorgegebene Lage (währenddessen Positionierungsmessungen durch das Messsystem durchgeführt werden), ein Zusammenschweissen der Blechteile sowie ein Ablegen bzw. Weitertransportieren der zusammengefügten Blechteile erfolgen. Positionierungspausen sind in diesem Beispiel nun jene Phasen, in welchen keine Messungen bezüglich der Positionierung der Blechteile durch das Messsystem erforderlich sind. Genau in diesen Positionierungspausen, die ansonsten Todzeiten für das Messsystem darstellen, werden erfindungsgemäss nun eine Messung oder einige wenige Messungen zur Kalibrierung des Messsystems, die verhältnismässig kurzweiligen Teil-Kalibrierungszyklen zugeordnet sind, durchgeführt.

Der Takt kann dabei während des Industrieprozesses auch variieren, sodass die Taktzeiten je nach vorgesehenem Produktionsschritt des Prozesses unterschiedlich lang sein können.

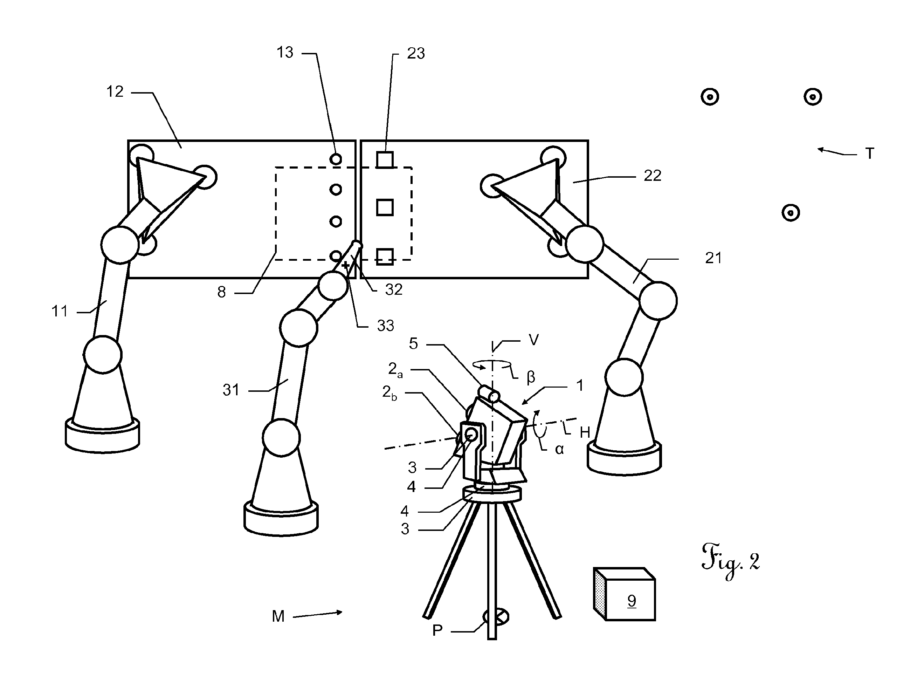

Figur 2 zeigt eine Beispielsituation aus einem Industrieprozess mit einem erfindungsgemässen Messsystem M in einer zweiten Ausführungsform. Dabei weist das Messsystem M nun eine als 3D-Bildaufnahmeeinrichtung ausgebildete Aufnahmeeinrichtung 1 zur Erfassung eines dreidimensionalen Bilds innerhalb des ersten Erfassungsbereichs 8 auf. Das dreidimensionale Bild setzt sich aus einer Vielzahl an Bildpunkten des ersten Bilds, denen jeweils eine Tiefeninformation zugeordnet ist, zusammen.

Geeignete 3D-Bildaufnahmeeinrichtung für derartige Messsysteme sind dem Fachmann bekannt und werden eingangs im Rahmen der Beschreibung des Standes der Technik erläutert. Je nach spezifischer Anforderung an das Messsystem kann der Fachmann jeweils dafür geeignete Messkomponenten entsprechend auswählen und zusammenstellen. Das erfindungsgemässe Kalibrierungsverfahren kann analog für sämtliche solcher Messsysteme angewendet werden.

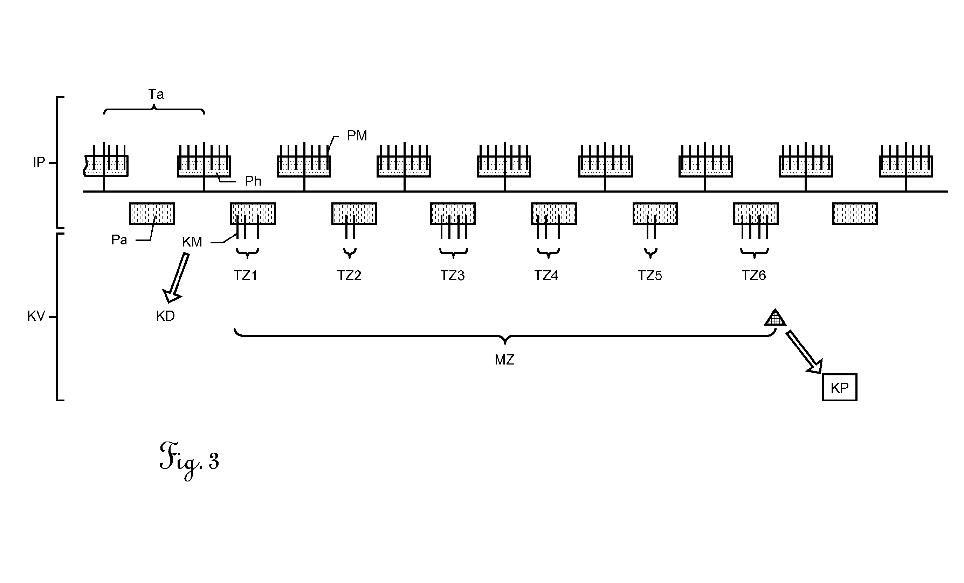

Figur 3 zeigt ein Diagramm mit einem schematisch dargestellten Industrieprozess IP und einem definierten Takt Ta, der den Fortschritt des Industrieprozesses IP steuert.

Im Rahmen des Industrieprozesses IP werden dabei im vorgegebenen Takt Ta wiederholt, und insbesondere abwechselnd,
- während Positionierungsphasen Ph ein Objekt definiert positioniert, wobei Messungen PM bezüglich der Positionierung des Objekts durch das Messsystem erfolgen, und
- während Positionierungspausen Pa sonstige Prozessschritte durchgeführt, insbesondere Bearbeitungs-, Verarbeitungs-, Kontroll- und/oder Transportierschritte, wofür keine Messungen PM bezüglich einer Positionierung eines Objekts im Rahmen des Industrieprozesses IP durch das Messsystem erforderlich sind.

Erfindungsgemäss ist der Kalibrierungsmesszyklus MZ, der zur Durchführung einer Kalibrierung KV des Messsystems dient, in mehrere, insbesondere eine Vielzahl von Teil-Zyklen TZ1,TZ2,TZ3,TZ4,TZ5,TZ6 aufgeteilt, denen jeweils eine oder mehrere Kalibrierungsmessungen KM zugeordnet sind.

Unter Einhaltung des Takts Ta des Industrieprozesses IP werden die Teil-Zyklen TZ1,TZ2,TZ3,TZ4,TZ5,TZ6 jeweils in einer der Positionierungspausen Pa durchgeführt, sodass der Kalibrierungsmesszyklus MZ, der in seiner Gesamtheit zumindest eine derartige Anzahl und Varietät von Kalibrierungsmessungen KM aufweist, dass sich anhand der dabei erfassten Kalibrierungsmessdaten KD die gewünschten Kalibrierungsparameter KP bezüglich des Messsystems bestimmen lassen, über mehrere, insbesondere eine Vielzahl von Positionierungspausen Pa verteilt wird.

Nach Durchführung der einzelnen Teil-Zyklen TZ1,TZ2,TZ3, TZ4,TZ5,TZ6 jeweils in den Positionierungspausen Pa, sodass die Kalibrierungsmessungen KM eingebettet in den Industrieprozess IP ohne Beeinflussung dessen Fortschritts erfolgen, können die gesuchten Kalibrierungsparameter KP aus der Zusammenschau der erfassten Kalibrierungsmessdaten KD abgeleitet oder geschätzt werden.

Im Speziellen kann der Kalibrierungsmesszyklus MZ eine derartige Anzahl und Varietät von Kalibrierungsmessungen KM aufweisen, dass die Kalibrierungsparameter KP durch die dabei erfassten Kalibrierungsmessdaten KD überbestimmt sind. Das Ermitteln der Kalibrierungsparameter KP kann in diesem Fall beispielsweise durch eine statistische Schätzung der Parameter oder eine Ausgleichsrechnung, insbesondere nach der Methode der kleinsten Quadrate, erfolgen.

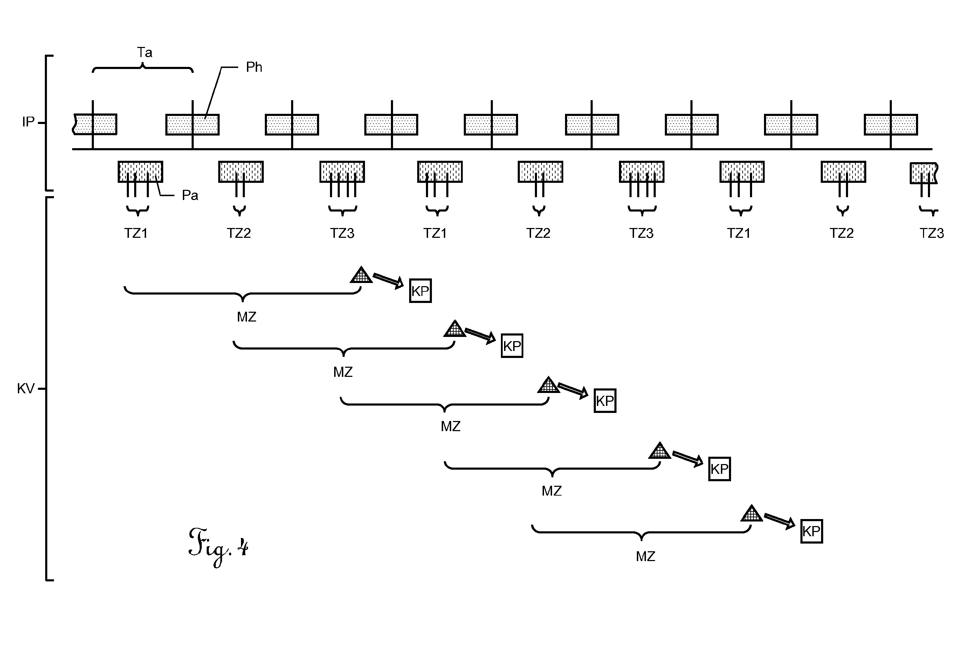

Figur 4 zeigt eine Weiterbildung des erfindungsgemässen Kalibrierungsverfahrens KV aus Figur 3, wobei der Kalibrierungsmesszyklus MZ hier nun beispielsweise die Teil-Zyklen TZ1,TZ2,TZ3 aufweist.

Wie aus Figur 4 ersichtlich, können zumindest manche - bzw. im dargestellten Fall sämtliche - der Teil-Zyklen TZ1,TZ2, TZ3 des Gesamtmesszyklus MZ fortlaufend unter Einhaltung des Takts Ta jeweils wiederum in einer der Positionierungspausen Pa wiederholt durchgeführt werden. Dabei kann nun ein fortlaufendes, jeweils aktualisierendes Ermitteln aller oder zumindest eines Teiles der Kalibrierungsparameter KP, insbesondere nach jedem Wiederholen eines der Teil-Zyklen TZ1,TZ2,TZ3, unter Berücksichtigung der bei Wiederholen der Teil-Zyklen TZ1,TZ2,TZ3 erfassten Kalibrierungsmessdaten erfolgen.

Vorzugsweise können die Teil-Zyklen TZ1,TZ2,TZ3 des Kalibrierungsmesszyklus sequentiell nacheinander in vorgegebener Reihenfolge wiederholt durchgeführt werden. Dabei kann ebenso nach jedem Wiederholen eines der Teil-Zyklen TZ1,TZ2,TZ3 ein jeweils aktualisierendes Ermitteln aller oder eines Teiles der Kalibrierungsparameter KP erfolgen. Jedoch kann alternativ auch erst nach Beendigung eines gesamten Kalibrierungsmesszyklus MZ, d.h. nachdem sämtliche Teil-Zyklen TZ1,TZ2,TZ3 wiederholt wurden, die Aktualisierung der Kalibrierungsparameter KP unter Berücksichtigung der bei Wiederholung der Teil-Zyklen TZ1,TZ2,TZ3 erfassten Kalibrierungsmessdaten erfolgen.

Des Weiteren können dabei jene Kalibrierungsmessdaten als Alt-Daten, die im Rahmen von zwischenzeitlich bereits wiederholten Teil-Zyklen erfasst wurden, durch die jeweils aktuellen Kalibrierungsmessdaten, welche beim Wiederholen dieser Teil-Zyklen erfasst werden, für das aktualisierende Ermitteln der Kalibrierungsparameter KP komplett ersetzt werden. Demnach verschiebt sich quasi der Kalibrierungsmesszyklus MZ fortlaufend zeitlich über den Industrieprozess IP und es erfolgt eine sich ständig aktualisierende Ermittlung der Kalibrierungsparameter KP des Messsystems.

Die Menge an für das Ableiten der Kalibrierungsparameter KP berücksichtigten Kalibrierungsmessdaten ist demnach also dynamisch.

Dadurch können erfindungsgemäss - insbesondere während des gesamten Industrieprozesses IP - verhältnismässig zeitnah und regelmässig an jeweils aktuelle Umgebungsbedingungen angepasste Kalibrierungsparameter KP ermittelt werden, um etwaige Veränderungen in der Mess- und somit auch Produktionsumgebung zeitnah zu detektieren bzw. das Mess-und Steuerungssystem diesen Veränderungen anzupassen.

Der Zielkonflikt, einerseits ein möglichst jeweils aktuell kalibriertes und somit eine hohe Präzision erlaubendes Messsystem bereitzustellen, und andererseits den Produktionsfortschritt des Industrie-/Produktionsprozesses, für den das Messsystem eingesetzt wird, möglichst wenig oder bestenfalls gar nicht durch Kalibrierungsvorgänge zu stören oder zu verzögern, kann somit verbessert gelöst werden.

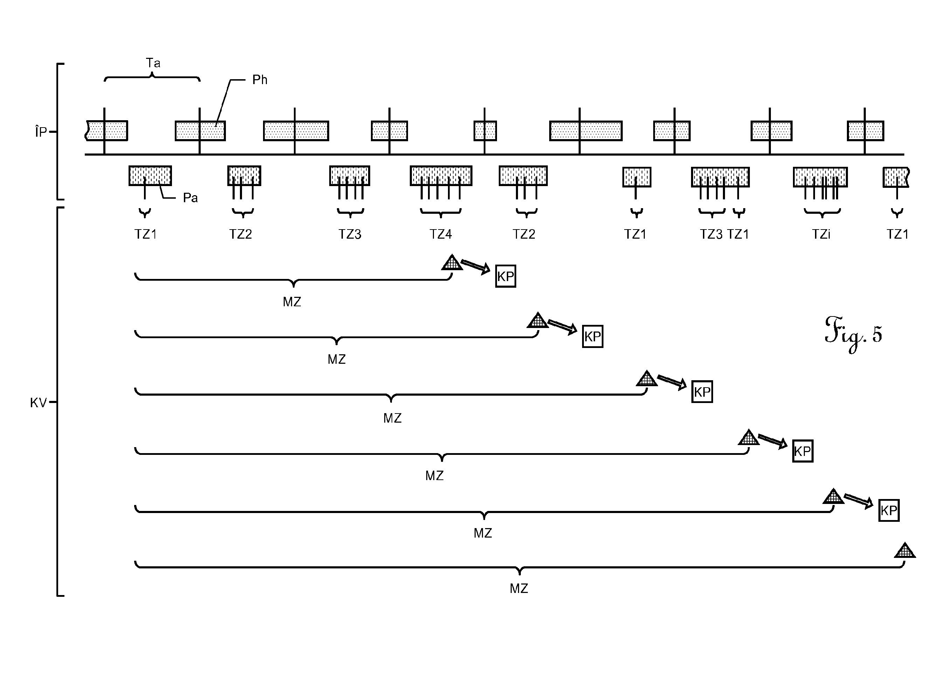

Entsprechend der Weiterbildung des erfindungsgemässen Kalibrierungsverfahrens KV aus Figur 5 werden zumindest manche der Teil-Zyklen TZ2,TZ1,TZ3,TZi fortlaufend unter Einhaltung des Takts Ta jeweils wiederum in einer der Positionierungspausen Pa wiederholt durchgeführt. Insbesondere können dabei auch mehrere der Teil-Zyklen, z.B. zwei Teil-Zyklen TZ3,TZ1, in einer einzigen Positionierungspause Pa durchgeführt werden. Ist die Dauer der jeweiligen Positionierungspause Pa von Vornherein fix und bekannt, so kann insbesondere jener Teil-Zyklus oder können jene Teil-Zyklen in dieser Positionierungspause Pa erfolgen, für die der erforderliche Zeitaufwand gut in das Zeitfenster der Positionierungspause Pa passt.

Zudem kann wiederum nach jedem Wiederholen eines der Teil-Zyklen - oder aber nach jeder Positionierungspause Pa-jeweils ein aktualisierendes Ermitteln der Kalibrierungsparameter KP unter Berücksichtigung der bei Wiederholung der Teil-Zyklen erfassten Kalibrierungsmessdaten erfolgen.

Dabei werden gemäss diesem Beispiel nun auch die im Rahmen jener Teil-Zyklen, die zwischenzeitlich bereits wiederholt wurden, erfassten Kalibrierungsmessdaten als Alt-Daten beim aktualisierenden Ermitteln der Kalibrierungsparameter KP zumindest teilweise, insbesondere komplett, berücksichtigt. Dadurch verlängert sich der Kalibrierungsmesszyklus MZ quasi fortlaufend und die Menge an zum Ermitteln der Kalibrierungsparameter KP berücksichtigter Kalibrierungsmessdaten nimmt durch das Wiederholen der Teil-Zyklen fortlaufend zu.

Optional können dabei jedoch die Alt-Daten beim aktualisierenden Ermitteln der Kalibrierungsparameter KP auch geringer gewichtet werden als die jeweils aktuellsten Kalibrierungsmessdaten.

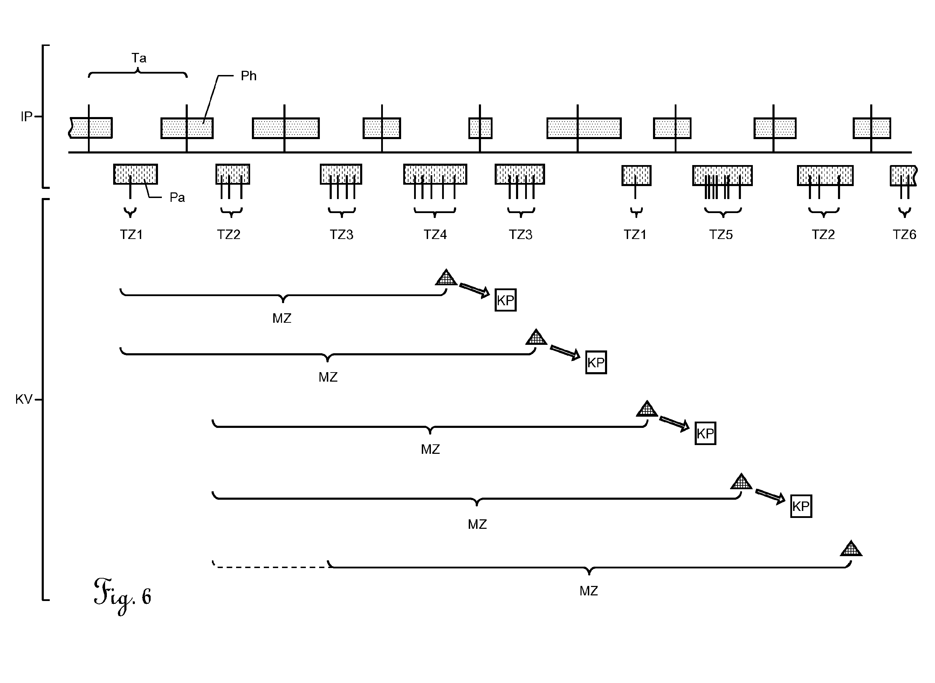

Entsprechend der Weiterbildung des erfindungsgemässen Kalibrierungsverfahrens KV aus Figur 6 werden wiederum zumindest manche der Teil-Zyklen fortlaufend unter Einhaltung des Takts Ta jeweils in einer der Positionierungspausen Pa wiederholt durchgeführt. Nach jedem Wiederholen eines der Teil-Zyklen erfolgt jeweils ein aktualisierendes Ermitteln aller oder zumindest eines Teiles der Kalibrierungsparameter KP unter Berücksichtigung der bei Wiederholung der Teil-Zyklen erfassten Kalibrierungsmessdaten.

Dabei werden gemäss diesem Beispiel die Alt-Daten beim aktualisierenden Ermitteln der Kalibrierungsparameter KP teilweise berücksichtigt und teilweise jedoch auch durch die bei Wiederholung eines Teil-Zyklus erfassten Messdaten ersetzt oder geringer gewichtet.

Die Menge an für das Ableiten der Kalibrierungsparameter KP berücksichtigten Kalibrierungsmessdaten ist demnach also dynamisch. Zum einen wird diese Menge fortlaufend durch jeweils neu erfasste Kalibrierungsmessdaten erweitert, zum anderen kann dabei jedoch eine Filterung oder Gewichtung der in der Menge gesammelten Daten erfolgen, sodass sich eine möglichst gute Schätzung bzw. Ableitung der Kalibrierungsparameter KP ergibt. Beispielsweise können nicht plausible "Ausreisser" der Kalibrierungsmessdaten sofort gänzlich ausgefiltert werden. Auch kann die Wahl des in der nächsten Positionierungspause zu wiederholenden Teil-Zyklus davon abhängig gemacht werden, wie plausibel die für diesen Teil-Zyklus erfassten Altdaten eingeschätzt werden. Beispielsweise kann demnach jener Teil-Zyklus zum nächstmöglichen Wiederholen ausgewählt werden, für welchen die bereits erfassten Altdaten "Ausreisser", d.h. untereinander hohe Abweichungen, aufweisen.

Es versteht sich, dass diese dargestellten Figuren nur mögliche Ausführungsbeispiele schematisch darstellen. Die verschiedenen Ansätze können ebenso miteinander sowie mit Kalibrierungsverfahren und Messsystemen des Stands der Technik kombiniert werden.

## Patentansprüche

1. Kalibrierungsverfahren (KV) für ein Messsystem (M), wobei das Messsystem (M) zur Bestimmung einer Positionierung eines im Rahmen eines Industrieprozesses (IP) definiert zu positionierenden Objekts (12, 22,32) ausgebildet ist und mindestens aufweist
• eine erste Aufnahmeeinrichtung (1,1a) mit
□ einer ersten Kamera (2,2a) zur Erfassung eines ersten Bilds innerhalb eines ersten Sichtbereichs (8,8a) und
□ einer ersten Winkelmesseinheit (4,4a) zur hochpräzisen Bestimmung einer ersten Winkelausrichtung der ersten Kamera (2,2a),
wobei im Rahmen des Industrieprozesses (IP) in einem bekannten Takt (Ta) wiederholt
• während Positionierungsphasen (Ph) das Objekt (12,22,32) definiert positioniert wird und durch das Messsystem (M) Messungen bezüglich der Positionierung des Objekts (12,22,32) durchgeführt werden und
• während Positionierungspausen (Pa) sonstige Prozessschritte erfolgen, insbesondere Bearbeitungs-, Verarbeitungs-, Kontroll- und/oder Transportierschritte,
wobei der Takt (Ta) einen Fortschritt des Industrieprozesses (IP) steuert,
wobei im Rahmen des Kalibrierungsverfahrens (KV) die Schritte erfolgen:
• Durchführen von Kalibrierungsmessungen (KM) eines Kalibrierungsmesszyklus (MZ) mit einem Erfassen von Kalibrierungsmessdaten (KD), wobei der Kalibrierungsmesszyklus (MZ) zumindest eine derartige Anzahl und Varietät von Kalibrierungsmessungen (KM) aufweist, dass sich anhand der erfassten Kalibrierungsmessdaten (KD) Kalibrierungsparameter (KP) bestimmen lassen, die sich zumindest auf Position (P) und Orientierung der ersten Aufnahmeeinrichtung (1,1a) in einem definierten Koordinatensystem beziehen, und
• Ermitteln der Kalibrierungsparameter (KP) anhand der Kalibrierungsmessdaten (KD),
**dadurch gekennzeichnet, dass**
• der Kalibrierungsmesszyklus (MZ) in mehrere, insbesondere eine Vielzahl von Teil-Zyklen (TZ1,TZ2, TZ3,TZ4,TZ5,TZ6,TZi) aufgeteilt ist, denen jeweils eine oder mehrere der Kalibrierungsmessungen (KM) zugeordnet sind, und
• unter Einhaltung des Takts (Ta) die Teil-Zyklen (TZ1,TZ2,TZ3,TZ4,TZ5,TZ6,TZi) jeweils in einer der Positionierungspausen (Pa) erfolgen, sodass der Kalibrierungsmesszyklus (MZ) über mehrere, insbesondere eine Vielzahl von Positionierungspausen (Pa) verteilt wird.

2. Kalibrierungsverfahren (KV) nach Anspruch 1,
**dadurch gekennzeichnet, dass**
• fortlaufend unter Einhaltung des Takts (Ta) zumindest manche der Teil-Zyklen (TZ1,TZ2,TZ3,TZ4,TZ5,TZ6,TZi) jeweils in einer der Positionierungspausen (Pa) wiederholt durchgeführt werden und
• ein fortlaufendes, jeweils aktualisierendes Ermitteln zumindest eines Teiles - insbesondere sämtlicher - der Kalibrierungsparameter (KP), im Speziellen nach jedem Wiederholen eines der Teil-Zyklen (TZ1,TZ2,TZ3, TZ4,TZ5,TZ6,TZi), unter Berücksichtigung der bei Wiederholen der Teil-Zyklen (TZ1,TZ2,TZ3,TZ4,TZ5, TZ6,TZi) erfassten Kalibrierungsmessdaten (KD) erfolgt.

3. Kalibrierungsverfahren (KV) nach Anspruch 2,
**dadurch gekennzeichnet, dass**
sämtliche der Teil-Zyklen (TZ1,TZ2,TZ3,TZ4,TZ5,TZ6,TZi) des Kalibrierungsmesszyklus (MZ) wiederholt durchgeführt werden, insbesondere sequentiell nacheinander in vorgegebener Reihenfolge.

4. Kalibrierungsverfahren (KV) nach Anspruch 2 oder 3,
**dadurch gekennzeichnet, dass**
im Rahmen jener Teil-Zyklen (TZ1,TZ2,TZ3,TZ4,TZ5, TZ6,TZi), die zwischenzeitlich bereits wiederholt wurden, erfasste Kalibrierungsmessdaten (KD) als Alt-Daten
• beim aktualisierenden Ermitteln der Kalibrierungsparameter (KP) zumindest teilweise unberücksichtigt bleiben und/oder geringer gewichtet werden und
• insbesondere durch die beim Wiederholen dieser Teil-Zyklen (TZ1,TZ2,TZ3,TZ4,TZ5,TZ6,TZi) erfassten Kalibrierungsmessdaten (KD) zumindest teilweise ersetzt werden.

5. Kalibrierungsverfahren (KV) nach einem der Ansprüche 2 bis 4,
**dadurch gekennzeichnet, dass**
jene Kalibrierungsmessdaten (KD) als Alt-Daten, die im Rahmen von zwischenzeitlich bereits wiederholten Teil-Zyklen (TZ1,TZ2,TZ3,TZ4,TZ5,TZ6,TZi) erfasst wurden, durch jene Kalibrierungsmessdaten (KD), welche beim Wiederholen dieser Teil-Zyklen (TZ1,TZ2,TZ3,TZ4,TZ5, TZ6,TZi) erfasst werden, für das aktualisierende Ermitteln der Kalibrierungsparameter (KP) komplett ersetzt werden, sodass sich der Kalibrierungsmesszyklus (MZ) fortlaufend zeitlich verschiebt.

6. Kalibrierungsverfahren (KV) nach einem der Ansprüche 2 bis 4,
**dadurch gekennzeichnet, dass**
auch im Rahmen jener Teil-Zyklen (TZ1,TZ2,TZ3,TZ4,TZ5, TZ6,TZi), die zwischenzeitlich bereits wiederholt wurden, erfasste Kalibrierungsmessdaten (KD) als Alt-Daten beim aktualisierenden Ermitteln der Kalibrierungsparameter (KP) zumindest teilweise, insbesondere komplett, berücksichtigt werden, sodass der Kalibrierungsmesszyklus (MZ) sich fortlaufend verlängert und eine Menge an zum Ermitteln der Kalibrierungsparameter (KP) berücksichtigter Kalibrierungsmessdaten (KD) durch das Wiederholen der Teil-Zyklen (TZ1,TZ2,TZ3,TZ4,TZ5,TZ6,TZi) fortlaufend zunimmt.

7. Kalibrierungsverfahren (KV) nach einem der vorangehenden Ansprüche,
**dadurch gekennzeichnet, dass**
• der Kalibrierungsmesszyklus (MZ) eine derartige Anzahl und Varietät von Kalibrierungsmessungen (KM) aufweist, dass die Kalibrierungsparameter (KP) durch die dabei erfassten Kalibrierungsmessdaten (KD) überbestimmt sind und
• das Ermitteln der Kalibrierungsparameter (KP) durch eine Ausgleichsrechnung, insbesondere nach der Methode der kleinsten Quadrate, erfolgt.

8. Kalibrierungsverfahren (KV) nach einem der vorangehenden Ansprüche,
**dadurch gekennzeichnet, dass**
als die Kalibrierungsmessungen (KM) jeweils zumindest
• ein erstes Bild anhand der ersten Kamera (2,2a) und
• die erste Winkelausrichtung anhand der ersten Winkelmesseinheit (4,4a) erfasst werden sowie
• Bildkoordinaten von einem oder mehreren definierten Ziel-Marken (T) im erfassten ersten Bild anhand elektronischer Bildverarbeitung bestimmt werden,
□ insbesondere wobei Positionen der Ziel-Marken (T) im Koordinatensystem und/oder Distanzen zwischen den Ziel-Marken (T) im Koordinatensystem bekannt sind.

9. Kalibrierungsverfahren (KV) nach einem der vorangehenden Ansprüche,
**dadurch gekennzeichnet, dass**
die Kalibrierungsmessungen (KM) eines Kalibrierungsmesszyklus (MZ) jeweils
• unter, insbesondere vordefinierter, Variation der ersten Winkelausrichtung der ersten Kamera (2,2a) und/oder
• unter Variation der Positionen der Ziel-Marken (T) im Koordinatensystem, wobei die Positionen der Ziel-Marken (T) und/oder eine Verrückung der Ziel-Marken (T) zwischen den Kalibrierungsmessungen (KM) im Koordinatensystem jeweils bekannt sind oder mitbestimmt werden,
durchgeführt werden.

10. Kalibrierungsverfahren (KV) nach einem der vorangehenden Ansprüche,
**dadurch gekennzeichnet, dass**
• die erste Aufnahmeeinrichtung (1,1a) eine erste Antriebseinheit (3,3a) zur Veränderung einer ersten Winkelausrichtung der ersten
Aufnahmeeinrichtung (1,1a) aufweist,
• das Messsystem (M) mindestens eine zweite Aufnahmeeinrichtung (1b) aufweist mit
□ einer zweiten Kamera (2b) zur Erfassung eines zweiten Bilds innerhalb eines definierten zweiten Erfassungsbereichs (8b),
□ insbesondere einer zweiten Antriebseinheit (3b) zur Veränderung einer zweiten Winkelausrichtung der zweiten Aufnahmeeinrichtung (1b) und
□ einer zweiten Winkelmesseinheit (4b) zur hochpräzisen Bestimmung der zweiten Winkelausrichtung,
• sich die Kalibrierungsparameter (KP) zusätzlich auf Position (P) und Orientierung der zweiten Aufnahmeeinrichtung (1b) im Koordinatensystem beziehen und
• als die Kalibrierungsmessungen (KM) jeweils zumindest
□ ein zweites Bild anhand der zweiten Kamera (2b) und □ die zweite Winkelausrichtung anhand der zweiten Winkelmesseinheit (4b) erfasst werden sowie
□ Bildkoordinaten von einem oder mehreren definierten Ziel-Marken (T) im erfassten zweiten Bild anhand elektronischer Bildverarbeitung bestimmt werden, · insbesondere wobei Positionen der Ziel-Marken (T) im Koordinatensystem und/oder Distanzen zwischen den Ziel-Marken (T) im Koordinatensystem bekannt sind.

11. Kalibrierungsverfahren (KV) nach auf Anspruch 9 rückbezogenem Anspruch 10,
**dadurch gekennzeichnet, dass**
im Rahmen einer Kalibrierungsmessung sich
• das Sichtbereich (8a) der ersten Kamera (2a) und
• das Sichtbereich (8b) der zweiten Kamera (2b) derart überschneiden, dass zumindest eine selbe Ziel-Marke, insbesondere mehrere selbe Ziel-Marken (T), sowohl im ersten als auch im zweiten Bild erfasst sind.

12. Kalibrierungsverfahren (KV) nach einem der vorangehenden Ansprüche,
**dadurch gekennzeichnet, dass**
die erste Aufnahmeeinrichtung (1) als 3D-Bildaufnahmeeinrichtung zur Erfassung eines dreidimensionalen Bilds innerhalb des ersten Erfassungsbereichs (8) ausgebildet ist, wobei sich das dreidimensionale Bild aus einer Vielzahl an Bildpunkten des ersten Bilds, denen jeweils eine Tiefeninformation zugeordnet ist, zusammensetzt.

13. Computerprogrammprodukt, das auf einem maschinenlesbaren Träger gespeichert ist, oder Computer-Daten-Signal, verkörpert durch eine elektromagnetische Welle, mit Programmcode zur Durchführung des Kalibrierungsverfahren (KV) nach einem der Ansprüche 1 bis 12, insbesondere wenn das Programm in einer elektronischen Datenverarbeitungseinheit (9) ausgeführt wird.

14. Messsystem (M) zur Bestimmung einer Positionierung eines im Rahmen eines Industrieprozesses (IP) definiert zu positionierenden Objekts (12,22,32),
wobei im Rahmen des Industrieprozesses (IP) in einem bekannten Takt (Ta) wiederholt
• während Positionierungsphasen (Ph) das Objekt (12,22,32) definiert positioniert wird und durch das Messsystem (M) Messungen bezüglich der Positionierung des Objekts (12,22,32) durchgeführt werden und
• während Positionierungspausen (Pa) sonstige Prozessschritte erfolgen, insbesondere Bearbeitungs-, Verarbeitungs-, Kontroll- und/oder Transportierschritte,
wobei der Takt (Ta) einen Fortschritt des Industrieprozesses (IP) steuert,
und wobei das Messsystem (M) mindestens aufweist
• eine erste Aufnahmeeinrichtung (1,1a) mit
□ einer ersten Kamera (2,2a) zur Erfassung eines ersten Bilds innerhalb eines ersten Sichtbereichs (8,8a) und
□ einer ersten Winkelmesseinheit (4,4a) zur hochpräzisen Bestimmung einer ersten Winkelausrichtung der ersten Kamera (2,2a), und
• eine Einheit (9) zur Steuerung zumindest folgender Schritte des Kalibrierungsverfahrens (KV) nach einem der Ansprüche 1 bis 12:
□ Durchführen von Kalibrierungsmessungen (KM) eines Kalibrierungsmesszyklus (MZ) mit einem Erfassen von Kalibrierungsmessdaten (KD), wobei der Kalibrierungsmesszyklus (MZ) zumindest eine derartige Anzahl und Varietät von Kalibrierungsmessungen (KM) aufweist, dass sich anhand der erfassten Kalibrierungsmessdaten (KD) Kalibrierungsparameter (KP) bestimmen lassen, die sich zumindest auf Position (P) und Orientierung der ersten Aufnahmeeinrichtung (1,1a) in einem definierten Koordinatensystem beziehen, und
□ Ermitteln der Kalibrierungsparameter (KP) anhand der Kalibrierungsmessdaten (KD),
□ wobei der Kalibrierungsmesszyklus (MZ) in mehrere, insbesondere eine Vielzahl von Teil-Zyklen (TZ1,TZ2, TZ3,TZ4,TZ5,TZ6,TZi) aufgeteilt ist, denen jeweils eine oder mehrere der Kalibrierungsmessungen (KM) zugeordnet sind, und
□ wobei unter Einhaltung des Takts (Ta) die Teil-Zyklen (TZ1,TZ2, TZ3,TZ4,TZ5,TZ6,TZi) jeweils in einer der Positionierungspausen (Pa) erfolgen, sodass der Kalibrierungsmesszyklus (MZ) über mehrere, insbesondere eine Vielzahl von Positionierungspausen (Pa) verteilt wird.
